# EUROPEAN PATENT SPECIFICATION

(11) **EP 0 825 519 B1**
(45) Date of publication and mention of the grant of the patent: **06.05.2004**
(21) Application number: 97305901.7
(22) Date of filing: 04.08.1997
(51) Int. Cl.: G06F 1/26

(54) **Method for controlling operation of optical disk drive**
Verfahren zur Steuerung eines optischen Plattenantriebs
Méthode de contrôle de disque optique

(30) Priority: 14.08.1996 KR 9633803
(43) Date of publication of application: 25.02.1998
(73) Proprietor: Samsung Electronics Co., Ltd., Suwon City, Kyungki-do (KR)
(72) Inventor: Ryu, Chang Hyun, Bundang-gu, Sungnam-city, Kyungki-do (KR)
(74) Representative: Mounteney, Simon James

(56) References cited:
- US-A- 5 239 652
- PATENT ABSTRACTS OF JAPAN vol. 096, no. 005, 31 May 1996 & JP 08 016285 A (TOSHIBA CORP), 19 January 1996,
- PATENT ABSTRACTS OF JAPAN vol. 096, no. 005, 31 May 1996 & JP 08 007483 A (SONY CORP), 12 January 1996,
- PATENT ABSTRACTS OF JAPAN vol. 018, no. 250 (P-1736), 12 May 1994 & JP 06 028765 A (MATSUSHITA ELECTRIC IND CO LTD), 4 February 1994,

## Description

### BACKGROUND OF THE INVENTION

### 1. Field of the Invention

The present invention relates in general to a method for controlling the operation of a optical disk drive, and more particularly to a method which checks the operation of a motor to determine whether an audio CD is reproduced in a power saving mode of a system and, if it is determined that the audio CD is reproduced in the power saving mode, does not block power to the optical disk drive and an audio part for the output of a reproduced signal from the audio CD. Herein, there are CD-ROM drive, DVD-ROM drive, and so forth as a kind of said optical disk drive.

### 2. Description of the Prior Art

Generally, the user may not continuously use a computer from power on till power off.

Namely, with the computer turned on, the user may take a rest while working or not working for a certain time due to other affairs.

In these cases, the computer itself discriminates whether it is used by the user and performs a power saving mode in accordance with the discriminated result.

A notebook computer is convenient to carry because it is smaller in size than a desktop computer.

A battery must be used for the notebook computer in an external place where the notebook computer cannot be connected directly to a power source.

However, the battery is limited in charge capacity. For this reason, the power saving mode must be performed so that the limited charge capacity of the battery can be used for a longer time.

In a computer, power is extremely well used in a central processing unit (CPU), a hard disk drive (HDD), a liquid crystal display (LCD) panel and a compact disk read only memory (optical disk drive) drive.

The computer discriminates whether it is not used for a predetermined time period.

If it is discriminated that the computer is not used for the predetermined time period, the computer performs a power saving mode to reduce its power consumption amount. Although being different according to makers and systems, the power saving mode may generally be classified into standby, suspend and power off modes.

In the case where a optical disk is reproduced in the optical disk drive according to a specific application level, a display function indicating the status of the optical disk and other functions are required.

In this case, a power management controller does not perform the power saving mode.

However, in the case where an audio CD is reproduced in the optical disk drive, the optical disk drive itself is operated even after a optical disk driving program is ended.

At this time, the power management controller does not recognize that the audio CD is in reproduction, but that the system is suspended in use.

As a result, the power management controller performs the power saving mode.

In other words, when the user uses the system to reproduce the audio CD, the computer does not recognize the system use and thus performs the power saving mode.

Document Patent Abstracts of Japan vol. 096, no. 005, 31 May 1996 & JP 08 016 285, 19 January 1996 shows a computer system in which the I/O units are so arranged as to form a unit independent from the computer. I/O operations can proceed with the computer powered off.

Document US 5 239 652 A shows a computer system in which the CPU is disconnected from the power supply by a logic responsive to a signal indicative of the inactive state, while still maintaining the memory and the peripheral devices of the computer fully powered.

### SUMMARY OF THE INVENTION

Therefore, the present invention has been made in view of the above problem, and it is an object of the present invention to provide a method for controlling the operation of a optical disk drive, which checks the operation of an optical disk drive motor to determine whether an audio CD is reproduced and, if it is determined that the audio CD is reproduced, performs a power saving mode suitable for such a situation. In accordance with the present invention, the above and other objects can be accomplished by a provision of a method for controlling an operation of a optical disk drive in a computer system, the computer system having the optical disk drive and a power management controller, comprising the first step of allowing the power management controller to generate a power saving control signal when the computer system is suspended in use for a predetermined time period; the second step of checking whether the optical disk drive is in operation, if the power saving control signal is generated at the first step; the third step of blocking power to all components of the computer system if it is checked at the second step that the optical disk drive is not in operation; and the fourth step of blocking power to components of the computer system except the optical disk drive and the associated components if it is checked at the second step that the optical disk drive is in operation.

### BRIEF DESCRIPTION OF THE DRAWINGS

The above and other objects, features and advantages of the present invention will be more clearly understood from the following detailed description taken in conjunction with the accompanying drawings, in which:
Fig. 1 is a schematic block diagram illustrating the construction of a computer to which the present invention is applied; and
Fig. 2 shows a method for controlling the operation of a optical disk drive in accordance with the present invention, wherein:
Fig. 2a is a flowchart illustrating a system initialization operation when power of the computer is turned on; and
Fig. 2b is a flowchart illustrating a optical disk drive control operation when a power saving mode is performed.

### DETAILED DESCRIPTION OF THE PREFERRED EMBODIMENTS

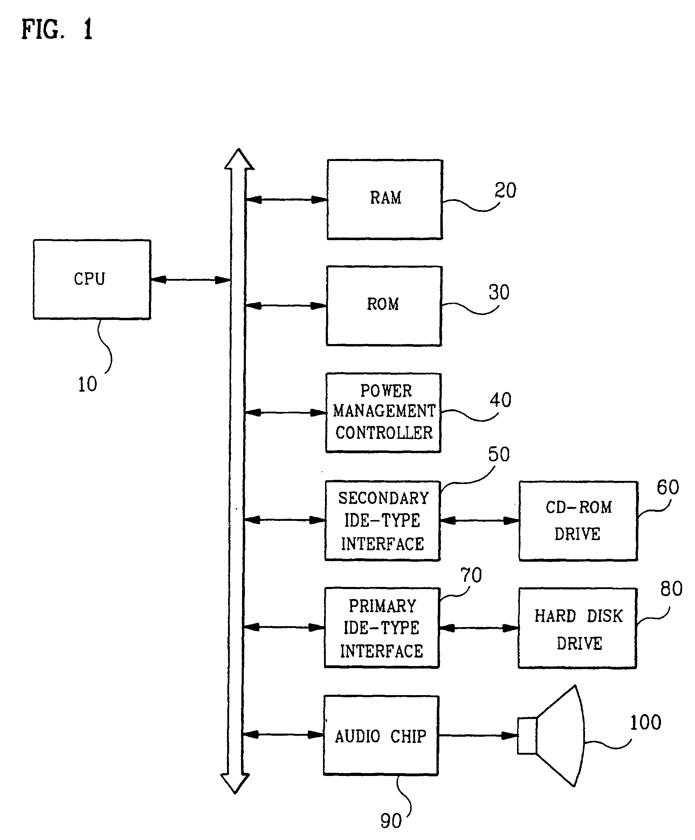

Fig. 1 is a schematic block diagram illustrating the construction of a computer to which the present invention is applied.

As shown in this drawing, the computer comprises a basic input/output system read only memory (BIOS ROM) 30 for storing a optical disk access operation/motor operation checking program therein, a CPU 10 for executing the program stored in the ROM 30, a random access memory (RAM) 20 for storing data processed by the CPU 10 therein, a power management controller 40 for checking whether the system is operated for a predetermined time period and, if the system is not operated for the predetermined time period, informing the CPU 10 of such a situation, a secondary IDE-type interface 50 for performing an interfacing operation with a optical disk drive 60, a primary IDE-type interface 70 for performing an interfacing operation with a hard disk drive 80, and an audio chip 90 for amplifying audio data from a optical disk or driving a speaker 100.

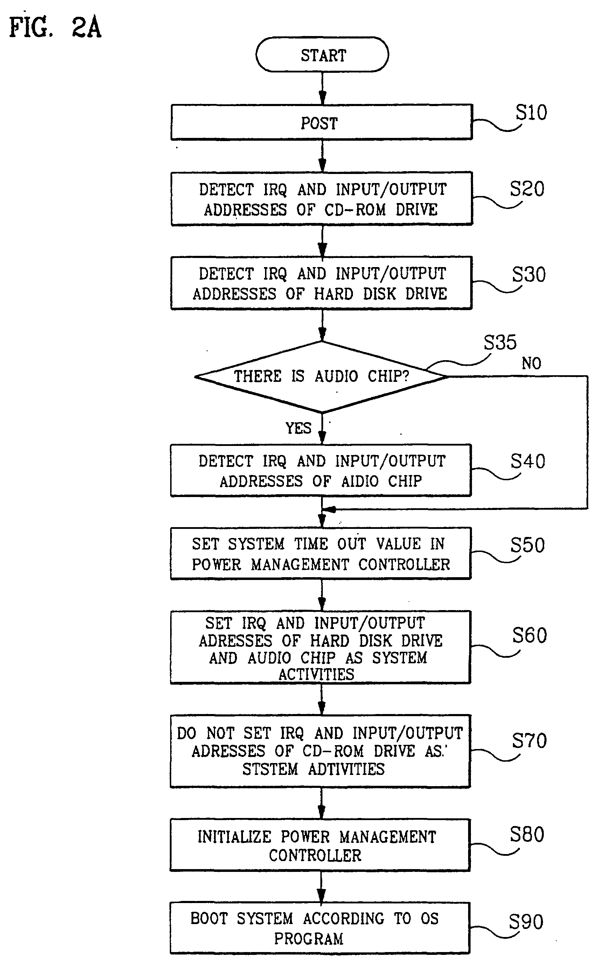

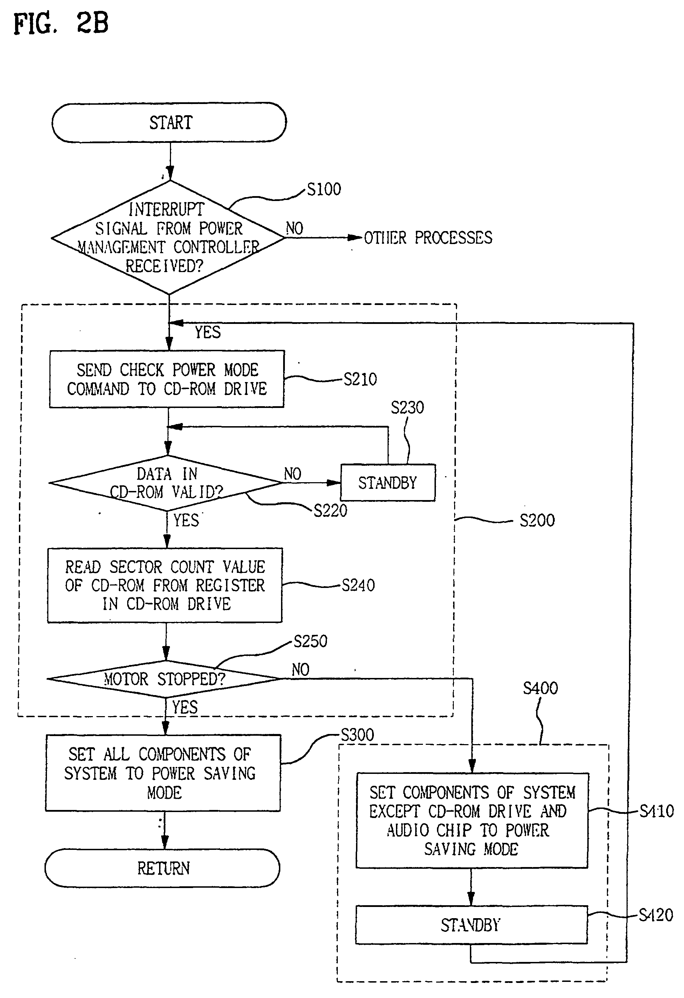

Fig. 2 shows a method for controlling the operation of the optical disk drive 60 in accordance with the present invention.

Fig. 2a is a flowchart illustrating a system initialization operation when power of the computer is turned on.

First, if the power of the computer is turned on, the CPU 10 performs a power on self test (POST) operation according to a system BIOS program at step S10.

At this time, the CPU 10 detects an interrupt request value IRQ and input/output addresses of the optical disk drive 60 at step S20, an interrupt request value IRQ and input/output addresses of the hard disk drive 80 at step S30 and an interrupt request value IRQ and input/output addresses of the audio chip 90 at step S40.

Also, the CPU 10 sets a system time out value in the power management controller 40 at step S50.

Then, the CPU 10 sets the detected interrupt request values IRQ and input/output addresses of the hard disk drive 80 and audio chip 90 as system activities at step S60 and does not set the detected interrupt request value IRQ and input/output addresses of the optical disk drive 60 as system activities at step S70.

Then, the CPU 10 initializes the power management controller 40 at step S80 and boots the system according to an operating system (OS) program at step S90.

Fig. 2b is a flowchart illustrating a optical disk drive control operation when a power saving mode is performed. First, upon receiving an interrupt signal from the power management controller 40 at step S100, the CPU 10 sends a "check power mode" command to the optical disk drive 60 at step S200 to read a sector count value of the optical disk from a register in the optical disk drive 60 and check in accordance with the read sector count value whether a motor of the optical disk drive 60 is in operation.

In the case where it is checked at the above step S200 that the motor of the optical disk drive 60 is not in operation, the CPU 10 sets all components of the system to the power saving mode at step S300.

However, in the case where it is checked at the above step S200 that the motor of the optical disk drive 60 is in operation, the CPU 10 sets components of the system except the optical disk drive 60 and audio chip 90 to the power saving mode at step 400.

Namely, at step 400, the CPU 10 operates only the optical disk drive 60 and a subsystem for the output of a reproduced signal from an audio CD and supplies no power to other system components.

Now, the method for controlling the operation of the optical disk drive 60 in accordance with the present invention will be mentioned in more detail.

First, if power is applied to the system, the CPU 10 performs the POST operation according to the system BIOS program at step S10.

At this time, the CPU 10 detects an interrupt request value IRQ and input/output addresses of the optical disk drive 60 at step S20, an interrupt request value IRQ and input/output addresses of the hard disk drive 80 at step S30 and an interrupt request value IRQ and input/output addresses of the audio chip 90 at step S40.

Also, the CPU 10 sets a system time out value in the power management controller 40 at step S50.

When the system is suspended in use for an interval of the set system time out value, the power saving mode is performed.

In order to indicate that the system is in use, the CPU 10 sets the detected interrupt request values IRQ and input/output addresses of the hard disk drive 80 and audio chip 90 as system activities at step S60.

On the other hand, the CPU 10 does not set the detected interrupt request value IRQ and input/output addresses of the optical disk drive 60 as system activities at step S70, so that it does not check the optical disk drive 60 when the power management controller 40 generates an interrupt signal to perform the power saving mode.

Then, the CPU 10 initializes the power management controller 40 at step S80 and boots the system according to the OS program at step S90.

On the other hand, the power management controller 40 checks the audio chip 90 and hard disk drive 80 to discriminate whether the system is not in use for a predetermined time period. If the system is not in use for the predetermined time period, the power management controller 40 sends the interrupt signal to the CPU 10 to perform the power saving mode. Upon receiving the interrupt signal from the power management controller 40 at step S100, the CPU 10, before performing the power saving mode, sends the "check power mode" command to the optical disk drive 60 at step S210 to check whether the motor of the optical disk drive 60 is in operation. At step S220, the CPU 10 checks whether data in the CD-ROM is valid.

If it is checked at the above step S220 that data in the optical disk is not valid, the CPU 10 stands by for a predetermined time period at step S230 and then returns to the above step S220 to again check whether data in the optical disk is valid.

In the case where it is checked at the above step S220 that data in the optical disk is valid, the CPU 10 reads a sector count value of the optical disk from the register in the optical disk drive 60 at step S240 to check at step S250 whether the motor of the optical disk drive 60 is in operation.

The read sector count value indicates whether the audio CD is in reproduction, namely, whether the motor of the optical disk drive 60 is in operation.

If it is checked at the above step S250 that the motor of the optical disk drive 60 is not in operation, the CPU 10 controls a power supply circuit at step S300 to set the optical disk drive 60 with other components of the system to the power saving mode.

However, in the case where it is checked at the above step S250 that the motor of the optical disk drive 60 is in operation, the CPU 10 recognizes that the audio CD is in reproduction.

Thus, at step S410, the CPU 10 leaves power to the optical disk drive 60 and the associated audio chip 90 and speaker 100 supplied, while setting the remaining components of the system to the power saving mode.

The CPU 10 checks the operating state of the motor of the optical disk drive 60 in the same manner as mentioned above at an interval of predetermined time.

When the audio CD is reproduced up to the last track and the motor of the optical disk drive 60 is then stopped, the CPU 10 controls the power supply circuit to block power to the optical disk drive 60 and the associated audio chip 90 and speaker 100.

As apparent from the above description, according to the present invention, the operation of the optical disk drive motor is checked to determine whether the audio CD is reproduced in the power saving mode.

If it is determined that the audio CD is reproduced in the power saving mode, power is not blocked to the optical disk drive and the associated components.

When the audio CD is completed in reproduction, the optical disk drive and the associated components enter the power saving mode.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A method for controlling an operation of an optical disk drive (60) in a computer system, said computer system having said optical disk drive (60) and a power management controller (40), comprising the steps of:
(a) allowing said power management controller (40) to generate a power saving control signal when said computer system is suspended in use for a predetermined time period;
(b) checking whether said optical disk drive (60) is in operation, if said power saving control signal is generated at said step (a);
(c) setting predetermined components of said computer system to power saving mode if it is checked at said step (b) that said optical disk drive (60) is not in operation; and
(d) setting predetermined components of said computer system, except said optical disk drive (60) and the associated components, to power saving mode if it is checked at said step (b) that said optical disk drive (60) is in operation.

2. A method for controlling an operation of an optical disk drive (60) in a computer system, as set forth in Claim 1, further comprising the step of setting interrupt request values and input/output addresses of a hard disk drive (80) and an audio chip (90) to initial values when power of said computer system is turned on and checking operations of said hard disk drive (80) and audio chip (90) to determine whether said computer system is in use.

3. A method for controlling an operation of an optical disk drive (60) in a computer system, as set forth in Claim 2, further comprising the step of performing a power on self test operation when the power of said computer system is turned on, to set said interrupt request values and input/output addresses of said hard disk drive (80) and audio chip as system activities and not to set an interrupt request value and input/output addresses of said optical disk drive (60) as system activities.

4. A method for controlling an operation of an optical disk drive (60) in a computer system, as set forth in Claim 1, wherein said step (b) includes the step of checking an operation of a motor of said optical disk drive (60) to check whether said optical disk drive (60) is in operation.

5. A method for controlling an operation of an optical disk drive (60) in a computer system, as set forth in Claim 1, wherein said step (d) includes the step of blocking power to components of said computer system except said optical disk drive (60) and an audio CD reproduction circuit if it is checked at said step (b) that said optical disk drive (60) is in operation.

## Patentansprüche

1. Verfahren zum Steuern eines Betriebs eines Laufwerks (60) für optische Platten in einem Computersystem, wobei das Computersystem das Laufwerk (60) für optische Platten und einen Energiemanagementcontroller (40) aufweist, umfassend die folgenden Schritte:
(a) Erlauben, dass der Energiemanagementcontroller (40) ein Energieeinsparungs-Steuersignal erzeugt, wenn das Computersystem für eine vorgegebene Zeitperiode in der Verwendung ausgesetzt wird;
(b) Überprüfen, ob das Laufwerk (60) für optische Platten in Betrieb ist, falls das Energieeinsparungs-Steuersignal in dem Schritt (a) erzeugt wird;
(c) Einstellen von vorgegebenen Komponenten des Computersystems auf einen Energieeinsparungsmodus, wenn in dem Schritt (b) überprüft wird, dass das Laufwerk (60) für optische Platten nicht in Betrieb ist; und
(d) Einstellen von vorgegebenen Komponenten des Computersystems, mit Ausnahme des Laufwerks (60) für optische Platten und der zugehörigen Komponenten, auf einen Energieeinsparungsmodus, wenn in dem Schritt (b) überprüft wird, dass das Laufwerk (60) für optische Platten in Betrieb ist.

2. Verfahren zum Steuern eines Betriebs eines Laufwerks (60) für optische Platten in einem Computersystem nach Anspruch 1, ferner umfassend die folgenden Schritte: Einstellen von Interrupt-Anforderungswerten und Eingangs/Ausgangs-Adressen des Festplatten-Laufwerks (80) und eines Audiochips (90) auf Anfangswerte, wenn eine Energie des Computersystems eingeschaltet wird, und Überprüfen von Betriebsvorgängen des Festplatten-Laufwerks (80) und des Audiochips (90), um zu bestimmen, ob das Computersystem in Verwendung ist.

3. Verfahren zum Steuern eines Betriebs eines Laufwerks (60) für optische Platten in einem Computersystem nach Anspruch 2, ferner umfassend die folgenden Schritte: Ausführen eines Energie-Ein-Selbsttestbetriebs, wenn die Energie des Computersystems eingeschaltet wird, um die Interrupt-Anforderungswerte und Eingangs/Ausgangs-Adressen des Festplatten-Laufwerks (80) und des Audiochips als Systemaktivitäten einzustellen und einen Interrupt-Anforderungswert und Eingangs/Ausgangs-Adressen des Laufwerks (60) für optische Platten als Systemaktivitäten nicht einzustellen.

4. Verfahren zum Steuern eines Betriebs eines Laufwerks (60) für optische Platten in einem Computersystem nach Anspruch 1, wobei der Schritt (b) den Schritt zum Überprüfen eines Betriebs eines Motors des Laufwerks (60) für optische Platten, um zu überprüfen, ob das Laufwerk (60) für optische Platten in Betrieb ist, einschließt.

5. Verfahren zum Steuern eines Betriebs eines Laufwerks (60) für optische Platten in einem Computersystem nach Anspruch 1, wobei der Schritt (d) den Schritt zum Abblocken von Energie an Komponenten des Computersystems mit Ausnahme des Laufwerks (60) für optische Platten und einer Audio-CD-Reproduktionsschaltung einschließt, wenn im Schritt (b) überprüft wird, dass das Laufwerk (60) für optische Platten in Betrieb ist.

## Revendications

1. Procédé pour commander un fonctionnement d'une unité de disque optique (60) dans un système d'ordinateur, ledit système d'ordinateur comportant ladite unité de disque optique (60) et un contrôleur de gestion de puissance (40), comprenant les étapes de:
(a) action consistant à permettre audit contrôleur de gestion de puissance (40) de générer un signal de commande d'économie de puissance lorsque ledit système d'ordinateur est suspendu en termes d'utilisation pendant une période temporelle prédéterminée;
(b) vérification de si oui ou non ladite unité de disque optique (60) est en fonctionnement si ledit signal de commande d'économie de puissance est généré au niveau de ladite étape (a);
(c) établissement de composants prédéterminés dudit système d'ordinateur dans un mode économie de puissance s'il est vérifié au niveau de ladite étape (b) que ladite unité de disque optique (60) n'est pas en fonctionnement; et
(d) établissement de composants prédéterminés dudit système d'ordinateur, à l'exception de ladite unité de disque optique (60) et des composants associés, dans un mode économie de puissance s'il est vérifié au niveau de ladite étape (b) que ladite unité de disque optique (60) est en fonctionnement.

2. Procédé pour commander un fonctionnement d'une unité de disque optique (60) dans un système d'ordinateur selon la revendication 1, comprenant en outre l'étape d'établissement de valeurs de requête d'interruption et d'adresses d'entrée/sortie d'une unité de disque dur (80) et d'une puce audio (90) à des valeurs initiales lorsque la puissance dudit système d'ordinateur est activée et de vérification des fonctionnements de ladite unité de disque dur (80) et de ladite puce audio (90) pour déterminer si oui ou non ledit système d'ordinateur est en utilisation.

3. Procédé pour commander un fonctionnement d'une unité de disque optique (60) dans un système d'ordinateur selon la revendication 2, comprenant en outre l'étape de réalisation d'une opération d'auto-test d'activation de puissance lorsque la puissance dudit système d'ordinateur est activée afin d'établir lesdites valeurs de requête d'interruption et lesdites adresses d'entrée/sortie de ladite unité de disque dur (80) et de ladite puce audio en tant qu'activités système et afin de ne pas établir une valeur de requête d'interruption et des adresses d'entrée/sortie de ladite unité de disque optique (60) en tant qu'activités système.

4. Procédé pour commander un fonctionnement d'une unité de disque optique (60) dans un système d'ordinateur selon la revendication 1, dans lequel ladite étape (b) inclut l'étape de vérification d'un fonctionnement d'un moteur de ladite unité de disque optique (60) pour vérifier si oui ou non ladite unité de disque optique (60) est en fonctionnement.

5. Procédé pour commander un fonctionnement d'une unité de disque optique (60) dans un système d'ordinateur selon la revendication 1, dans lequel ladite étape (d) inclut l'étape de blocage de la puissance sur des composants dudit système d'ordinateur à l'exception de ladite unité de disque optique (60) et d'un circuit de reproduction de CD audio s'il est vérifié au niveau de ladite étape (b) que ladite unité de disque optique (60) est en fonctionnement.
